# EUROPÄISCHE PATENTSCHRIFT

(11) **EP 1 370 776 B1**
(45) Veröffentlichungstag und Bekanntmachung des Hinweises auf die Patenterteilung: **12.04.2006**
(21) Anmeldenummer: 02719642.7
(22) Anmeldetag: 26.02.2002
(51) Int. Cl.: F16B 35/02

(54) **VERBINDUNGSELEMENT**
CONNECTING ELEMENT
CONNECTEUR

(30) Priorität: 07.03.2001 DE 10111020
(43) Veröffentlichungstag der Anmeldung: 17.12.2003
(73) Patentinhaber: ROBERT BOSCH GMBH, 70442 Stuttgart (DE)
(72) Erfinder: DUKART, Anton, 70839 Gerlingen (DE); MARX, Klaus, 70565 Stuttgart (DE)
(86) Internationale Anmeldenummer: PCT/DE2002/000699
(87) Internationale Veröffentlichungsnummer: WO 2002/070906

(56) Entgegenhaltungen:
- EP-A- 0 787 980
- US-A- 5 628 601

## Beschreibung

Die Erfindung betrifft ein Verbindungselement, insbesondere eine Schraube oder einen Bolzen zur Verbindung zweier Körper, nach der Gattung des Hauptanspruches.

### Stand der Technik

Für elektronische Systeme in Kraftfahrzeugen wird an Verbindungsstellen zwischen zwei Komponenten bzw. Körpern, in denen sich eine einwirkende Kraft konzentriert, zunehmend ein kleiner und kompakt bauender Kraftsensor benötigt, der in großen Stückzahlen und gleichzeitig preiswert zu fertigen ist. Dies gilt besonders für die Messung der auf einen Sitz eines Kraftfahrzeuges einwirkenden Gewichtskraft und deren Verteilung bzw. Änderung als Funktion der Zeit. Daneben werden auch in der Fertigungsmesstechnik bzw. Qualitätsmesstechnik zunehmend genaue, statisch messende Kraftsensoren benötigt.

Bekannte kleinbauende Sensoren basieren meist auf dem piezoelektrischen Wandlerprinzip, und sind deswegen nur dynamisch zu betreiben. Statische Kraftsensoren werden dagegen vielfach als Biegefedern ausgeführt, die, ausgestattet mit Dehnungsmessstreifen, zwar sehr präzise Kraftsensoren ergeben, diese weisen jedoch eine relativ große Baugröße auf und sie sind vergleichsweise teuer.

Daneben sind auch magnetoelastische Sensoren bekannt, die entweder auf dem Kreuzduktor-Prinzip basieren, das besonders für Anwendungen geeignet ist, die bei hohen Temperaturen oh-ne Elektronik vor Ort auskommen müssen, oder bei denen nur ein kleiner Bauraum zur Verfügung steht, oder die nach dem Torduktor-Prinzip arbeiten, bei dem über zwei um 90° zueinander gedrehte, mit Spulen umwickelte U-Kerne kraftabhängig die Magnetfeldverteilung berührungslos erfasst wird.

Das Kreuzduktor-Prinzip hat den Nachteil, dass es nur kleine Nutzspannungen liefert, die meistens mit einem großen Offset beaufschlagt und daher nur schwer auswertbar sind. Zudem können sie bei bewegten oder rotierenden Teilen nicht oder nur mit großem zusätzlichen Aufwand eingesetzt werden. Das Torduktor-Prinzip erlaubt Kraftmessungen auch an rotierenden Teilen, ist aber stark abstandssensitiv.

Aufgabe der Erfindung war die Bereitstellung eines kleinen und kompakt bauenden Kraftsensors in Form eines Verbindungselementes, mit dem insbesondere eine zuverlässige Sitzgewichtssensierung am Sitz eines Kraftfahrzeuges möglich ist. Dabei sollte durch den Kraftsensor die Sitzhöhe nicht vergrößert werden und bei Überbelastung ein fester Anschlag gegeben sein.

Aus EP-A-0787 980 offenbart einen Bolzen, der mit einer Buchse verbunden ist, wobei in einem Innraum der Buchse ein Ultraschallwandler ein Magnet und Spulen vorhanden sind, wobei Ultraschallwellen, die durch den Ultraschallwandler erzeugt werden, über ein Oberflächenstrom am Bolzen letztlich zu einer Induktionsspannung in den Spulen führen.

### Vorteile der Erfindung

Das erfindungsgemäße Verbindungselement hat gegenüber dem Stand der Technik den Vorteil, dass es durch verschiedene Querschnittsdurchmesser des eingesetzten Schaftes und der Geometrie bzw. der Dimensionierung des in den Schaft eingebrachten Schlitzes in einfacher Weise an verschiedene Messbereiche anpassbar ist.

Weiter ist das erfindungsgemäße Verbindungselement sehr klein und kompakt baubar und es realisiert ein statisches Messprinzip. Insofern ist es für die Vermessung der Verbindungskräfte zwischen zwei Teilen universell einsetzbar.

Ein weiterer Vorteil des erfindungsgemäßen Verbindungselementes liegt darin, dass das erzeugte Magnetfeld kraftproportional und berührungslos in dem durch den Schlitz gegebenen Luftspalt bzw. durch das in dessen Umgebung geeignet angeordnete magnetisch sensitive Element abgegriffen werden kann. Dabei ist insbesondere vorteilhaft, dass bereits durch eine geringe Änderung der Form bzw. Breite des Schlitzes unter der Einwirkung einer äußeren Kraft oder einer mechanischen Spannung am Ort des magnetisch sensitiven Elementes über das das Magnetfeld erzeugende Bauteil eine starke Flussdichteänderung hervorgerufen wird. Damit führen bereits geringe Änderungen der Form des Schlitzes zu einem hohen Messsignal.

Bei dem erfindungsgemäßen Verbindungselement ist weiter vorteilhaft, dass das magnetisch sensitive Element mit einer zugeordneten Auswerteelektronik darin voll integrierbar ist, wodurch eine einfache Zuleitung und eine kompakte, äußerst kostengünstige Bauweise ermöglicht wird.

Ein weiterer Vorteil des erfindungsgemäßen Verbindungselementes, insbesondere bei dessen Ausführung als Kraftmessschraube oder Kraftmessbolzen am Sitz eines Kraftfahrzeuges, ist die Möglichkeit, darüber auch eine Gurtkraftsensierung, beispielsweise an der Anbindung zum Sitz des Kraftfahrzeuges, vorzunehmen.

Vorteilhafte Weiterbildungen der Erfindung ergeben sich aus den in den Unteransprüchen genannten Maßnahmen.

So ist besonders vorteilhaft, wenn als magnetisch sensitives Element ein an sich bekanntes Hall-Sensorelement eingesetzt wird, welches vor allem eine gute Nullpunktstabilität aufweist.

Daneben ist im Fall der eingesetzten magnetischen Messtechnik vorteilhaft, dass sich das magnetisch sensitive Element im magnetischen Nullpunkt befindet, und deshalb auch eine unter Umständen auftretende Alterung des Magnetkreises bzw. des das Magnetfeld erzeugenden Bauteils keinen Beitrag zum Offset des Hall-Sensorelementes liefert.

Durch das zusätzliche Vorsehen von üblichen Dehnungsmessstreifen ist es weiter in einfacher Weise möglich, eine auf das Verbindungselement einwirkende Zugbelastung von einer Druckbelastung zu unterscheiden.

### Zeichnungen

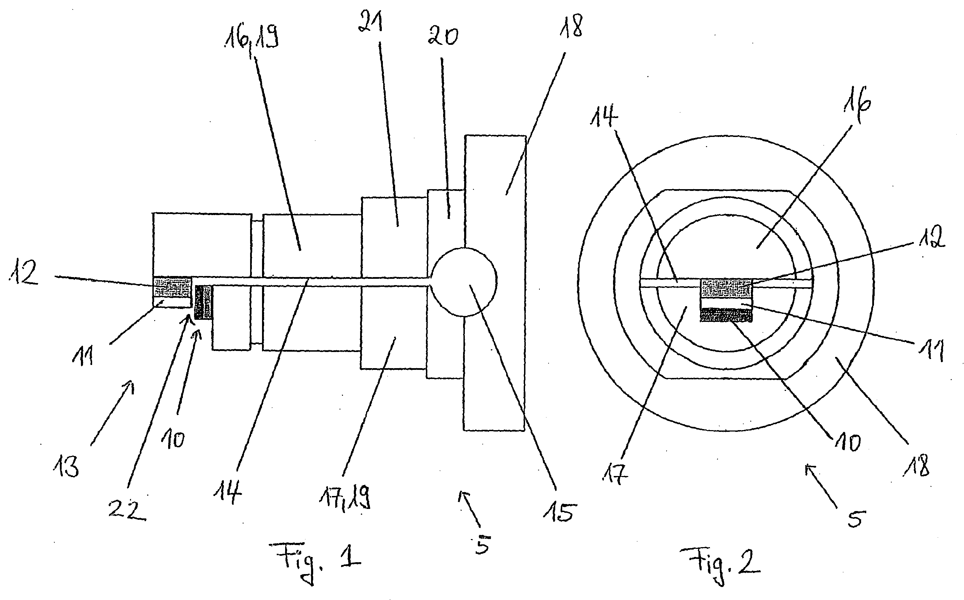

Die Erfindung wird anhand der Zeichnungen und in der nachfolgenden Beschreibung näher erläutert. Die Figur 1 zeigt ein Ausführungsbeispiel eines Verbindungselementes in Form einer Schraube im Schnitt. Die Figur 2 zeigt eine von dem Schaft des Verbindungselementes ausgehende Draufsicht auf Figur 1.

### Ausführungsbeispiele

Die Figur 1 zeigt ein Verbindungselement 5 in Form einer Schraube oder eines Bolzens mit einem Kopf 18 und einem damit verbundenen, insbesondere zumindest bereichsweise mit einem Gewinde versehenen Schaft bzw. Gewindebolzen 19, wobei in dem Bereich des Überganges von dem Kopf 18 auf den Schaft 19 zusätzlich ein umlaufender Bund 20 und ein abgeflachter, umlaufender Bund 21 vorgesehen ist. In Draufsicht auf den Kopf 18 bzw. den Schaft 19 sind diese, wie in Figur 2 gezeigt, zylindersymmetrisch ausgebildet, d.h. die Grundfläche ist kreisförmig.

In Figur 1 ist weiter vorgesehen, dass der Schaft 19 einen Schlitz 14 aufweist, der entlang der Längsachse des Schaftes 19 verläuft und diesen, abgesehen von einer im Weiteren noch erläuterten Ausnehmung 13, in zwei symmetrisch aufgebaute Teile, einen ersten Teil und einen zweiten Teil 17, teilt.

Weiter zeigt Figur 1, dass in dem Bereich des Überganges von dem Kopf 18 auf den Schaft 19 eine mit dem Schlitz 14 in Verbindung stehende durchgehende Bohrung 15 in das Verbindungselement 5 eingebracht ist, die senkrecht zu der Längsachse des Schaftes 19 verläuft. Diese Bohrung 15 ist in vielen Fällen hinsichtlich einer erhöhten Messgenauigkeit vorteilhaft ist, kann bei Bedarf jedoch auch weggelassen werden.

Insgesamt wird das Verbindungselement 5 durch den Schlitz 14 bzw. die Bohrung 15, abgesehen von der Ausnehmung 13, in zwei äquivalente Teile 16, 17 geteilt, die über den Kopf 18 miteinander verbunden sind. Insofern ist das Verbindungselement 5 auch als Messfeder zu verstehen.

In Figur 1 ist weiter dargestellt, dass das zweite Teil 17 an seinem dem Kopf 18 abgewandten Ende die Ausnehmung 13 aufweist. Diese Ausnehmung wurde nach dem Erzeugen des Schlitzes 14 durch Einsägen des zweiten Teils 17 senkrecht zu der Richtung des Schlitzes 14 erzeugt, so dass das zweite Teil 17 gegenüber dem ersten Teil 16 um die Höhe der Ausnehmung 13 rückgesetzt ist. In Draufsicht hat das durch Erzeugen der Ausnehmung 13 entfernte Teil die Form eines Halbmondes.

Weiter ist auf der Oberseite des dem Kopf 18 abgewandten Endes des zweiten Teils 17 ein ein Magnetfeld erzeugendes Bauteil 10 aufgebracht, das im Konkreten ein plättchenförmiger, mit dem Schaft 19 bzw. dem zweiten Teil 17 des Schaftes 19 verbundener Permanentmagnet ist. Daneben ist im Bereich der Ausnehmung 13 auf dem ersten Teil 16 des Schaftes 19 ein Träger 12 und darauf ein magnetisch sensitives Element 11 angeordnet, so dass das magnetisch sensitive Element 11 und das das Magnetfeld erzeugende Bauteil 10 über einen schmalen Luftspalt 22 von beispielsweise 0,3 mm voneinander beabstandet sind. Das magnetisch sensitive Element 11 ist beispielsweise ein übliches Hall-Sensorelement, dass bevorzugt so ausgelegt und angeordnet ist, dass es sich im unbelasteten Zustand des Verbindungselementes 5 im magnetischen Nullpunkt des Bauteils 10 befindet und damit einen stabilen Offset besitzt.

Weitere Einzelheiten zum Aufbau des Verbindungselementes 5 sind aus Figur 1 und Figur 2 ersichtlich. Dabei sei betont, dass das Verbindungselement 5, das gemäß Figur 1 bzw. Figur 2 als Schraube mit einem Gewindebolzen ausgeführt ist, die bei Bedarf mit einer geeigneten Mutter versehen werden kann, auch als Bolzen, insbesondere als Steckbolzen ohne Kopf, oder als Niete zur Verbindung zweier Körper ausgebildet sein kann.

Die Gesamtlänge der Verbindungselementes 5 beträgt beispielsweise 10 mm bis 30 mm, der Durchmesser des Schaftes 19 4 mm bis 12 mm, der Durchmesser des umlaufenden Bundes 20 6 mm bis 16 mm bei einer Höhe von 2 mm bis 6 mm, der Durchmesser des abgeflachten umlaufenden Bundes 8 mm bis 20 mm bei einer Höhe von 2 mm bis 6 mm, der Durchmesser des Kopfes 18 12 mm bis 30 mm bei einer Höhe von 2 mm bis 6 mm, der Durchmesser der Bohrung 15 2 mm bis 6 mm, die Höhe des Schlitzes 14 0,2 mm bis 1 mm, insbesondere 0,5 mm, die Breite des Luftspaltes 22 0,1 mm bis 0,8 mm, insbesondere 0,3 mm, die Dicke des plättchenförmigen Permanentmagneten 10 0,5 mm bis 1,5 mm und die Höhe des Trägers 12 0,5 mm bis 2 mm. Bevorzugt ist die Höhe des Trägers 12 so gewählt, dass das Hall-Sensorelement 11 in Draufsicht gemäß Figur 2 symmetrisch bzw. zentriert gegenüber dem Permanentmagneten 10 angeordnet ist.

Das Verbindungselement 5 gemäß Figur 1 bzw. Figur 2 eignet sich insbesondere zur Befestigung eines Sitzes eines Kraftfahrzeuges an einer mit der Karosserie des Kraftfahrzeuges verbundenen Gleitschiene, wobei es gleichzeitig als Kraftsensor zur Messung der auf den Sitz einwirkenden Gewichtskraft dient. In der Regel ist dabei vorgesehen, dass der Sitz mit vier Befestigungsschrauben bzw. Verbindungselementen 5 versehen ist, an denen jeweils die auf den Sitz einwirkende Kraft gemessen wird.

Das Messprinzip des Verbindungselementes 5 beruht darauf, dass eine auf das Verbindungselement 5 bzw. die beiden Teile 16, 17 des durch den Schlitz 14 geteilten Schaftes 19 einwirkende Kraft oder mechanische Spannung eine Änderung der Geometrie des Schlitzes 14 und gleichzeitig eine in den Kopf induzierte mechanische Spannung hervorruft. Diese Änderung der Geometrie des Schlitzes 14 wird dann mit Hilfe des Magneten 10 und des Hall-Sensorelementes 11 durch Veränderung des Luftspaltes 22 zwischen beiden detektiert werden.

Da das als Kraftmessbolzen eingesetzte, vorstehend beschriebene Verbindungselement 5 als Funktion der einwirkenden Gewichtskraft eine V-förmige Kennlinie aufweist, ist es damit in der Regel schwierig, damit eine positive Gewichtskraft von einer negativen Gewichtskraft zu unterscheiden, sofern diese Unterscheidung bei Betrieb gewünscht wird.

Um nun mit dem Verbindungselement 5 zusätzlich eine positive Gewichtskraft von einer negativen Gewichtskraft zuverlässig unterscheiden zu können, bzw. um ein Verbindungselement 5 zu realisieren, das nur eine positive Gewichtskraft detektiert, nutzt man aus, dass in dem Bereich einer negativen Gewichtskraft, d.h. dem zweiten Quadranten der Kennlinie, die dadurch hervorgerufene Dehnung in dem Verbindungselement 5 eine geringe Unsymmetrie aufweist. Diese Unsymmetrie wird durch die axial verteilte Krafteinleitung auf das Verbindungselement 5 hervorgerufen und kann mit Hilfe eines zusätzlich vorgesehenen Dehnungsmessstreifens bzw. einer Anordnung von beispielsweise in Dünnschichttechnologie aufgebrachten Differenz-Dehnungsmessstreifen ermittelt werden.

In einer bevorzugten Ausgestaltung des Verbindungselementes 5 ist daher vorgesehen, dass bereichsweise, beispielsweise auf der dem Schaft 19 abgewandten Oberseite des Kopfes 18, zusätzlich mindestens ein nicht dargestellter Dehnungsmessstreifen in das Verbindungselement 5 integriert bzw. auf dieses aufgebracht ist, mit dem ebenfalls eine auf das Verbindungselement 5 einwirkende Kraft oder mechanische Spannung erfassbar ist. Derartige, beispielsweise in Dünnschichttechnologie aufgebrachte Dehnungsmessstreifen bzw. Anordnungen Differenz-Dehnungsmessstreifen mit zugehöriger Auswerteelektronik sind aus dem Stand der Technik bekannt.

Alternativ zu dem Vorsehen von zusätzlichen Dehnungsmessstreifen kann das erfindungsgemäße Verbindungselement 5 jedoch auch dadurch auf die Richtung der einwirkenden Gewichtskraft sensitiv gestaltet werden, dass die beiden Teile 16, 17 mit den in sie krafteinleitenden Teilen der Körper, die das Verbindungselement 5 verbindet, geeignet verankertwerden.

## Patentansprüche

1. Verbindungselement, mit einem länglichen Schaft (19), wobei der Schaft (19) zumindest bereichsweise einen Schlitz (14) und eine Ausnehmung (13) aufweist, wobei im Bereich der Ausnehmung (13) ein ein Magnetfeld erzeugendes Bauteil (10) und davon beabstandet ein magnetisch sensitives Element (11) angeordnet ist, **dadurch gekennzeichnet, dass** das das Magnetfeld erzeugende Bauteil (10) und das magnetisch sensitive Element (11) derart angeordnet sind, dass eine auf das Verbindungselement (5) einwirkende Kraft oder mechanische Spannung eine Änderung der Geometrie des Schlitzes (14) hervorruft und damit eine Veränderung eines durch das Bauteil (10) hervorgerufenen Signales des magnetisch sensitiven Elementes (11) bewirkt.

2. Verbindungselement nach Anspruch 1, **dadurch gekennzeichnet, dass** der Schaft (19) in Draufsicht zumindest in einer Umgebung der Ausnehmung (13) quadratisch, rechteckig, oval oder kreisförmig ausgebildet ist, wobei der Schlitz (14) entlang der Längsachse des Schaftes (19) verläuft und diesen, abgesehen von der Ausnehmung (13), in zwei symmetrisch aufgebaute Teile (16, 17) teilt.

3. Verbindungselement nach einem der vorangehenden Ansprüche, **dadurch gekennzeichnet, dass** der Schaft (19) mit einem Kopf (18) verbunden ist.

4. Verbindungselement nach einem der vorangehenden Ansprüche, **dadurch gekennzeichnet, dass** die Ausnehmung (13) an dem dem Kopf (18) abgewandten Ende des Schaftes (19) in den Schaft (19) eingebracht ist.

5. Verbindungselement nach einem der vorangehenden Ansprüche, **dadurch gekennzeichnet, dass** die Ausnehmung (13) und der Schlitz (14) derart in den Schaft (19) eingebracht sind, dass der Schaft (19) in einen ersten Teil (16) und einen zweiten Teil (17) gegliedert ist, die durch den Schlitz (14) voneinander getrennt sind, und wobei eines der beiden Teile (16, 17) an seinem dem Kopf (18) abgewandten Ende die Ausnehmung (13) aufweist.

6. Verbindungselement nach einem der vorangehenden Ansprüche, **dadurch gekennzeichnet, dass** eines der beiden Teile (16, 17) des Schaftes (19) mit dem das Magnetfeld erzeugenden Bauteil (10) und das andere Teil (16, 17) mit dem magnetisch sensitiven Element (11) verbunden ist.

7. Verbindungselement nach einem der vorangehenden Ansprüche, **dadurch gekennzeichnet, dass** das das Magnetfeld erzeugende Bauteil (10) ein insbesondere plättchenförmiger, mit dem Schaft (19) verbundener Permanentmagnet ist.

8. Verbindungselement nach einem der vorangehenden Ansprüche, **dadurch gekennzeichnet, dass** das magnetisch sensitive Element (11) ein insbesondere auf einem Träger (12) angeordnetes, mit dem Schaft (19) verbundenes Hall-Sensorelement ist.

9. Verbindungselement nach einem der vorangehenden Ansprüche, **dadurch gekennzeichnet, dass** in einer Umgebung der Verbindung des Schaftes (19) mit dem Kopf (18) eine Bohrung (15) derart in den Kopf (18) und/oder den Schaft (19) eingebracht ist, dass sie mit dem Schlitz (14) in Verbindung steht.

10. Verbindungselement nach einem der vorangehenden Ansprüche, **dadurch gekennzeichnet, dass** es durch den Schlitz (14) als gedachte Symmetrieebene, abgesehen von der Ausnehmung (13), in zwei gleiche Teile (16, 17) geteilt wird, die durch den Kopf (18) miteinander verbunden sind.

11. Verbindungselement nach einem der vorangehenden Ansprüche, **dadurch gekennzeichnet, dass** bereichsweise zusätzlich ein Dehnungsmessstreifen vorgesehen ist, mit dem eine auf das Verbindungselement (5) einwirkende Kraft oder mechanische Spannung erfassbar ist.

12. Verbindungselement nach einem der vorangehenden Ansprüche, **dadurch gekennzeichnet, dass** es als Schraube, Bolzen, Steckbolzen oder Niete zur Verbindung zweier Körper ausgebildet ist.

13. Verwendung eines Verbindungselementes nach einem der vorangehenden Ansprüche zur Erfassung einer auf den Sitz eines Fahrzeuges einwirkenden Kraft oder mechanischen Spannung.

## Claims

1. Connecting element, with an elongated shaft (19), at least certain regions of the shaft (19) having a slot (14) and a recess (13), a component (10) that generates a magnetic field and, spaced apart from it, a magnetically sensitive element (11) being arranged in the region of the recess (13), **characterized in that** the component (10) that generates the magnetic field and the magnetically sensitive element (11) are arranged in such a way that a force or mechanical stress acting on the connecting element (5) induces a change in the geometry of the slot (14) and thereby brings about a change in a signal of the magnetically sensitive element (11) induced by the component (10).

2. Connecting element according to Claim 1, **characterized in that**, in plan view, the shaft (19) is formed in a square, rectangular, oval or circular shape, at least in an area around the recess (13), the slot (14) running along the longitudinal axis of the shaft (19) and dividing the latter, apart from the recess (13), into two symmetrically constructed parts (16, 17).

3. Connecting element according to one of the preceding claims, **characterized in that** the shaft (19) is connected to a head (18).

4. Connecting element according to one of the preceding claims, **characterized in that** the recess (13) is made in the shaft (19) at the end of the shaft (19) remote from the head (18).

5. Connecting element according to one of the preceding claims, **characterized in that** the recess (13) and the slot (14) are made in the shaft (19) in such a way that the shaft (19) is divided into a first part (16) and a second part (17), which are separated from each other by the slot (14), and one of the two parts (16, 17) having the recess (13) at its end remote from the head (18).

6. Connecting element according to one of the preceding claims, **characterized in that** one of the two parts (16, 17) of the shaft (19) is connected to the component (10) that generates the magnetic field and the other part (16, 17) is connected to the magnetically sensitive element (11).

7. Connecting element according to one of the preceding claims, **characterized in that** the component (10) that generates the magnetic field is a permanent magnet, in particular in the form of a platelet, connected to the shaft (19).

8. Connecting element according to one of the preceding claims, **characterized in that** the magnetically sensitive element (11) is a Hall sensor element, arranged in particular on a support (12) and connected to the shaft (19).

9. Connecting element according to one of the preceding claims, **characterized in that**, in an area around the connection of the shaft (19) to the head (18), a bore (15) is made in the head (18) and/or the shaft (19) in such a way that it is in connection with the slot (14).

10. Connecting element according to one of the preceding claims, **characterized in that**, apart from the recess (13), it is divided by the slot (14) as an imaginary plane of symmetry into two identical parts (16, 17), which are connected to each other by the head (18).

11. Connecting element according to one of the preceding claims, **characterized in that**, in certain regions, a strain gauge is additionally provided, with which a force or mechanical stress acting on the connecting element (5) can be sensed.

12. Connecting element according to one of the preceding claims, **characterized in that** it is formed as a screw, bolt, insert bolt or rivet for the connection of two bodies.

13. Use of a connecting element according to one of the preceding claims for sensing a force or mechanical stress acting on the seat of a vehicle.

## Revendications

1. Connecteur doté d'une tige longitudinale (19), présentant au moins par zones une fente (14) et un évidement (13), avec dans la zone de l'évidement (13) un composant (10) générant un champ magnétique et un élément (11) magnéto sensible écarté de ce composant,
**caractérisé en ce que**
le composant (10) générant le champ magnétique et l'élément (11) magnéto sensible sont disposés pour qu'une force ou une tension mécanique agissant sur le connecteur (5) entraîne une modification de la géométrie de la fente (14) et donc une modification d'un signal, généré par le composant (10), de l'élément magnéto sensible (11).

2. Connecteur selon la revendication 1,
**caractérisé en ce que**
la tige (19) est en vue de dessus au moins à proximité de l'évidement (13) sous forme carrée, rectangulaire, ovale ou circulaire, la fente (14) s'étendant le long de l'axe longitudinal de la tige (19) et la séparant en deux parties (16, 17) assemblées symétriquement, abstraction faite de l'évidement (13).

3. Connecteur selon l'une quelconque des revendications précédentes,
**caractérisé en ce que**
la tige (19) est raccordée à une tête (18).

4. Connecteur selon l'une quelconque des revendications précédentes,
**caractérisé en ce que**
l'évidement (13) dans la tige (19) se situe à l'extrémité de la tige (19) opposée à la tête (18)

5. Connecteur selon l'une quelconque des revendications précédentes,
**caractérisé en ce que**
l'évidement (13) et la fente (14) dans la tige (19) divisant cette dernière en une première partie (16) et une deuxième partie (17) séparées l'une de l'autre par la fente (14), et l'une des deux parties (16, 17) présente l'évidement (13) sur son extrémité opposée à la tête (18).

6. Connecteur selon l'une quelconque des revendications précédentes,
**caractérisé en ce que**
l'une des deux parties (16, 17) de la tige (19) est raccordée au composant (10) générant le champ magnétique et l'autre partie (16, 17) est raccordée à l'élément (11) magnéto sensible.

7. Connecteur selon l'une quelconque des revendications précédentes,
**caractérisé en ce que**
le composant (10) générant le champ magnétique est un aimant permanent raccordée à la tige (19), notamment en forme de plaquette.

8. Connecteur selon l'une quelconque des revendications précédentes,
**caractérisé en ce que**
l'élément (11) magnéto sensible est un élément capteur à effet Hall raccordé à la tige (19), notamment monté sur un support (12).

9. Connecteur selon l'une quelconque des revendications précédentes,
**caractérisé en ce qu'**
un alésage (15) à proximité du raccord de la tige (19) avec la tête (18) est aménagé dans la tête (18) et/ou dans la tige (19) de manière à être raccordé à la fente (14).

10. Connecteur selon l'une quelconque des revendications précédentes,
**caractérisé en ce qu'**
il est divisé par la fente (14) en tant que plan de symétrie imaginaire, en deux parties égales (16, 17) raccordées l'une à l'autre par la tête (18) abstraction faite de l'évidement (13).

11. Connecteur selon l'une quelconque des revendications précédentes,
**caractérisé en ce qu'**
une bande de mesure extensiométrique est de plus prévue par zones pour détecter une force ou une tension mécanique agissant sur le connecteur (5).

12. Connecteur selon l'une quelconque des revendications précédentes,
**caractérisé en ce qu'**
il est conçu en tant que vis, boulon, axe embrochable ou rivet pour raccorder deux corps.

13. Utilisation d'un connecteur selon l'une quelconque des revendications précédentes, pour détecter une force ou une tension mécanique agissant sur le siège d'un véhicule.
